# FASCICULE DE BREVET EUROPEEN

(11) **EP 2 055 102 B1**
(45) Date de publication et mention de la délivrance du brevet: **16.08.2017**
(21) Numéro de dépôt: 07802764.6
(22) Date de dépôt: 21.08.2007
(51) Int. Cl.: H04N 7/167, H04N 7/16

(54) **PROCÉDÉ DE TRANSMISSION D'UNE DONNÉE COMPLÉMENTAIRE A UN TERMINAL DE RÉCEPTION**
VERFAHREN ZUR ÜBERTRAGUNG EINES ZUSÄTZLICHEN DATUM ZU EINEM EMPFANGSENDGERÄT
METHOD OF TRANSMITTING A COMPLEMENTARY DATUM TO A RECEIVING TERMINAL

(30) Priorité: 23.08.2006 FR 0653433
(43) Date de publication de la demande: 06.05.2009
(73) Titulaire: Viaccess, 92057 Paris La Défense Cedex (FR)
(72) Inventeur: CHIEZE, Quentin, 75009 Paris (FR); NEAU, Louis, 35410 Chateaugiron (FR); TRONEL, Bruno, 92400 Courbevoie (FR)
(74) Mandataire: Ilgart, Jean-Christophe
(86) Numéro de dépôt international: PCT/EP2007/058689
(87) Numéro de publication internationale: WO 2008/023023

(56) Documents cités:
- EP-A- 1 703 731
- WO-A-02/13529
- FR-A1- 2 866 772
- FR-A1- 2 876 858
- US-A1- 2005 238 170

## Description

### DOMAINE TECHNIQUE

L'invention se situe dans le domaine du contrôle d'accès à des services multimédia, et concerne plus spécifiquement un procédé de transmission d'au moins une donnée complémentaire D dans une liste de mots de contrôle CWᵢ d'accès à un contenu embrouillé transmis par un serveur de contenu d'un opérateur à un équipement d'utilisateur comportant un terminal de réception associé à un processeur de sécurité, chaque mot de contrôle CWᵢ de ladite liste étant destiné à désembrouiller ledit contenu au cours d'une cryptopériode déterminée.

L'invention concerne également un processeur de sécurité et un terminal de réception coopérant dans un équipement d'utilisateur destiné à recevoir ledit contenu avec une liste de mots de contrôle CWᵢ dans laquelle est transmise une donnée complémentaire D.

L'invention concerne en outre un serveur de contenu destiné à transmettre à un équipement d'utilisateur un contenu embrouillé auquel est associé une liste de mots de contrôle CWᵢ destinés chacun à désembrouiller ledit contenu au cours d'une cryptopériode déterminée, liste dans laquelle est transmise une donnée complémentaire D.

L'invention concerne également un terminal de réception destiné à recevoir un contenu embrouillé transmis par un serveur, ledit contenu étant accompagné d'une liste de mots de contrôle CWᵢ, chaque mot de contrôle étant destiné à désembrouiller ledit contenu au cours d'une cryptopériode déterminée dans laquelle liste au moins un des mots de contrôle a été remplacé par une grandeur X résultant du traitement d'une donnée complémentaire D par une fonction G ayant une fonction duale H.

L'invention s'applique indépendamment de la nature du réseau support ou du type de service offert (TV live, PVR, VOD).

### ÉTAT DE LA TECHNIQUE ANTÉRIEURE

Les contenus protégés par un système de contrôle d'accès CAS (pour Conditional Access System) peuvent être fournis à un utilisateur selon différents types de services, tels la diffusion en direct (TV Live), la distribution à la demande (VoD, pour Video on Demand) ou la relecture de contenus enregistrés (PVR, pour Personal Video Recorder, ou NPVR, pour Network Personal Video Recorder).

Dans tous les cas, les contenus fournis à l'utilisateur sont d'abord embrouillés par des mots de contrôle CWᵢ et l'opérateur contrôle l'accès à un contenu en conditionnant l'obtention des mots de contrôle à la détention par l'utilisateur d'une autorisation « commerciale ». A cet effet, l'opérateur attache au contenu une condition d'accès qui doit être satisfaite par l'abonné ou par son équipement pour pouvoir désembrouiller ce contenu.

La transmission des mots de contrôle et la description de la condition d'accès sont réalisées par des messages de contrôle d'accès spécifiques, dits messages ECM (Entitlement Control Message). Les mots de contrôle CWᵢ sont chiffrés par une clé de service avant d'être transmis dans les messages ECM. Comme il est connu de l'homme de l'art, la condition d'accès comporte un ou plusieurs critères (référence à un abonnement, numéro du programme, coût du programme, seuil de niveau moral, ...) qui doivent être satisfaits par des titres d'accès (abonnement, ticket, ...) mémorisés dans le processeur de sécurité ou par des accords donnés par l'utilisateur (accord de Pay Per View, accord moral, ...). La transmission de la clé de service et des titres d'accès est réalisée par des messages de contrôle d'accès spécifiques, dit messages EMM (Entitlement Management Message).

Au niveau de l'équipement de l'utilisateur, les messages ECM sont traités par le processeur de sécurité afin, notamment, d'en vérifier les paramètres de sécurité et de comparer la condition d'accès aux titres d'accès préalablement inscrits dans une mémoire non volatile du processeur de sécurité. Si la condition d'accès est satisfaite par les titres d'accès, le processeur de sécurité restitue, par déchiffrement, chaque mot de contrôle qu'il fournit au terminal de réception, permettant ainsi le désembrouillage.

Le processeur de sécurité échange ainsi des données avec le terminal de réception : notamment, il reçoit et traite les messages EMM et ECM, et fournit les mots de contrôle permettant le désembrouillage des contenus. Dans un exemple bien connu, le processeur de sécurité est une carte à puce et ces échanges de données entre terminal de réception et processeur de sécurité sont faits via une interface conforme à la norme ISO 7816.

Ce principe d'architecture, dans lequel se place l'invention, s'applique également quand le processeur de sécurité est intégré dans le terminal de réception, ou quand il s'interface avec, ou est intégré dans, un module de contrôle d'accès et de désembrouillage externe au terminal de réception, tel qu'un module conforme à la norme EN 50221 (« Common Interface Specification for Conditional Access »).

Un équipement d'utilisateur mettant en oeuvre du contrôle d'accès selon ce principe d'architecture peut faire l'objet d'utilisation frauduleuse. Une utilisation frauduleuse particulière consiste à exploiter les ressources d'accès conditionnel de l'équipement d'utilisateur hors de son usage « normal » par l'utilisateur, soit en partageant sans autorisation l'utilisation du processeur de sécurité (ou « card sharing »), soit en redistribuant frauduleusement les mots de contrôle fournis par le processeur de sécurité (ou « CW sharing »).

L'utilisation partagée du processeur de sécurité d'un équipement d'utilisateur consiste à solliciter celui-ci par plusieurs terminaux de réception via un réseau de communication bidirectionnel. Cette utilisation se traduit notamment par la soumission au processeur de sécurité de messages syntaxiquement corrects mais en nombre ou diversité excessifs par rapport à ce qu'ils sont généralement du fait d'une utilisation « normale » du système.

La redistribution de mots de contrôle consiste à faire bénéficier plusieurs terminaux de réception des mots de contrôle CWᵢ obtenus par l'un d'eux, via un réseau de communication. Cette forme de piratage est applicable notamment lorsque les mots de contrôle CWᵢ transitent en clair entre le processeur de sécurité et le terminal de réception. L'écoute de l'interface du processeur de sécurité et du terminal de réception permet ainsi l'interception des mots de contrôle et leur redistribution frauduleuse vers d'autres terminaux de réception (« MacCormac Hack »), redistribution qui peut être réalisée au moyen d'un serveur diffusant les mots de contrôle CWᵢ ou les fournissant en réponse à la soumission des ECM associés au contenu considéré.

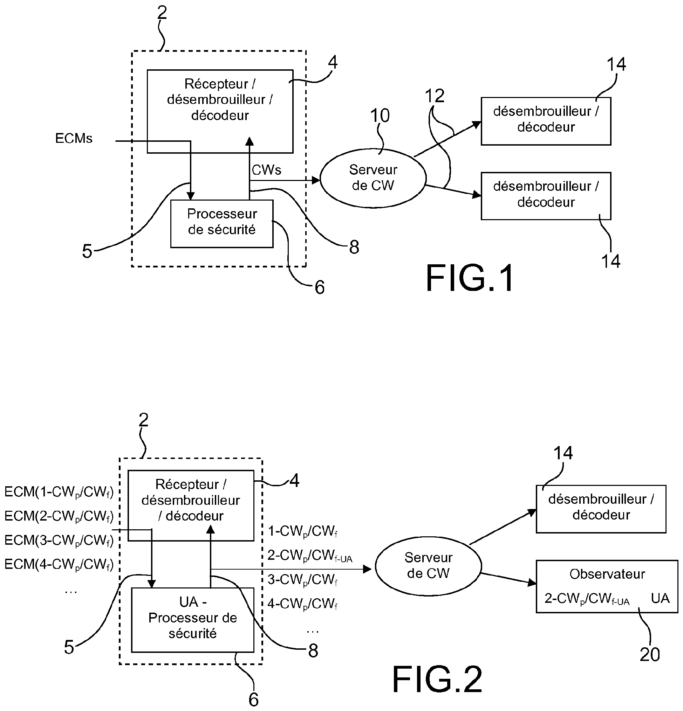

La figure 1 illustre schématiquement une telle situation de redistribution frauduleuse de mots de contrôle.

En référence à cette figure 1, un équipement 2 d'utilisateur comporte un terminal de réception 4 associé à un processeur de sécurité 6 tel qu'une carte à puce. Le terminal de réception 4 reçoit des ECM de la tête du réseau et transmet (flèche 5) ces ECM au processeur de sécurité 6. Le processeur de sécurité 6 traite les ECM reçus pour vérifier les conditions d'accès et déchiffre les mots de contrôle contenus dans ces ECM, puis transmet (flèche 8) les mots de contrôle déchiffrés au terminal de réception 4. Ces mots de contrôle sont susceptibles d'être interceptés frauduleusement sur l'interface processeur de sécurité/terminal de réception puis distribués frauduleusement (flèches 12) par un serveur pirate 10 à des terminaux de réception 14.

Des solutions sont connues pour lutter contre les utilisations frauduleuses de type « card sharing » ou « CW sharing ». Par exemple, un appariement peut être activé entre processeur de sécurité et terminal de réception comme décrit dans les brevets français FR 2 866 772 et FR 2 866 773 ; les mots de contrôle peuvent être envoyés sous forme chiffrée par le processeur de sécurité au terminal de réception comme décrit dans la demande de brevet FR 2 882 208 ; le processeur de sécurité peut fournir au terminal de réception, non pas les mots contrôle, mais des données permettant au terminal de les reconstituer comme décrit dans la demande de brevet FR 2 876 858. Toutefois, ces diverses solutions nécessitent, en complément à l'adaptation du processeur de sécurité, une adaptation des terminaux de réception. S'il est relativement aisé de changer une carte à puce, il est plus contraignant et plus coûteux de changer un parc existant de terminaux de réception pour supporter ces nouvelles fonctionnalités.

Le but de l'invention est de permettre de « tracer » les équipements d'utilisateurs, typiquement leurs processeurs de sécurité, contribuant à un dispositif de partage de cartes ou de redistribution de mots de contrôle, et donc de permettre à l'opérateur concerné d'identifier, par des moyens extérieurs au système, le client titulaire d'un tel équipement d'utilsateur contribuant à ce piratage. La mise en oeuvre de cette invention implique la seule adaptation du processeur de sécurité sans devoir modifier les terminaux de réception existants.

La solution proposée s'applique principalement dans le cas où les mots de contrôle transitent sous forme non chiffrée sur l'interface entre processeur de sécurité et terminal de réception. Elle peut aussi être mise en oeuvre quand cette interface est protégée par chiffrement mais rester latente pour être réactivée dans le cas où cette protection d'interface serait compromise.

### EXPOSÉ DE L'INVENTION

L'invention préconise un procédé de transmission d'au moins une donnée complémentaire D dans une liste de mots de contrôle CWᵢ d'accès à un contenu embrouillé transmis par un serveur de contenu d'un opérateur à un équipement d'utilisateur comportant un terminal de réception associé à un processeur de sécurité, chaque mot de contrôle CWᵢ de ladite liste étant destiné à désembrouiller ledit contenu au cours d'une crypto période déterminée.

Le procédé selon l'invention comporte les étapes suivantes :
a) remplacer préalablement au moins l'un des mots de contrôle de ladite liste par une grandeur X résultant du traitement de ladite donnée complémentaire D par une fonction G ayant une fonction duale H,
   et à la réception de ladite liste par le terminal,
b) récupérer ladite donnée complémentaire D par traitement de ladite grandeur X par la fonction duale H.

Selon une caractéristique de l'invention, la grandeur X présente un format identique à celui du mot de contrôle remplacé.

Préférentiellement, la fonction duale H restitue en outre le mot de contrôle remplacé lors de l'étape a).

Dans une première variante de mise en oeuvre du procédé selon l'invention, la liste de mots de contrôle CWᵢ comporte un premier mot de contrôle CW_{c} destiné à déchiffrer le contenu au cours de la cryptopériode courante, et un deuxième mot de contrôle CWₛ destiné à déchiffrer le contenu au cours de la cryptopériode suivante, et en ce que ladite grandeur X remplace le deuxième mot de contrôle CWₛ.

Dans une application particulière du procédé selon l'invention, la donnée complémentaire D représente un identifiant de l'utilisateur ou un identifiant unique UA du processeur de sécurité.

Dans une autre application du procédé selon l'invention, ladite donnée complémentaire D est une commande destinée au terminal de réception.

Lors de l'application du procédé à un contenu donné, la fonction G et le remplacement du mot de contrôle sont exécutés dans le serveur de contenu de l'opérateur.

Dans une autre variante, la fonction G et le remplacement du mot de contrôle sont exécutés dans le processeur de sécurité associé au terminal de réception.

Dans ce dernier cas, l'exécution de la fonction G et du remplacement du mot de contrôle est pilotée par l'opérateur et comporte une étape d'armement et une étape d'activation, l'étape d'armement consistant à définir, pour le contenu donné et pour un processeur de sécurité sélectionné, une période d'armement pendant laquelle la fonction G et le remplacement du mot de contrôle sont exécutables, et l'étape d'activation consistant à commander l'exécution, par ledit processeur de sécurité sélectionné, de la fonction G et du remplacement d'un mot de contrôle particulier par la grandeur X conformément aux conditions définies à l'étape d'armement.

Préférentiellement, la période d'armement et la désignation du contenu pour lesquelles ladite fonction G et le remplacement du mot de contrôle peuvent être exécutés sont transmises sous forme masquée dans un message EMM aux processeurs de sécurité sélectionnés, et l'exécution de la fonction G et le remplacement du mot de contrôle particulier par la grandeur X sont déclenchés par l'opérateur au moyen d'une commande spécifique transmise sous forme masquée dans un message EMM ou dans un message ECM.

Dans une deuxième variante, l'exécution de la fonction G et du remplacement du mot de contrôle particulier par la grandeur X est déclenchée de façon autonome par le processeur de sécurité.

Dans une troisième variante, l'exécution de la fonction G et du remplacement du mot de contrôle particulier par la grandeur X est déclenchée de façon aléatoire.

Dans un mode particulier de réalisation de l'invention, la désignation du mot de contrôle particulier à remplacer par la grandeur X est réalisée par un générateur d'ECM (ECM-G) associé au serveur de contenu. Cette désignation du mot de contrôle et l'identification du contenu en cours sont transmises sous forme masquée aux processeurs de sécurité dans des messages ECM associés audit contenu.

Les processeurs de sécurité implémentant le procédé selon l'invention comportent un module permettant de remplacer dans la liste de mots de contrôle CWᵢ au moins l'un des mots de contrôle par une grandeur X résultant du traitement par une fonction G d'une donnée complémentaire D à transmettre au terminal de réception, ladite donnée complémentaire D étant récupérée par ledit terminal de réception au moyen d'une fonction H duale de la fonction G.

Le serveur de contenu destiné à transmettre à un équipement d'un utilisateur un contenu embrouillé comporte un module permettant de remplacer dans ladite liste de mots de contrôle CWᵢ au moins l'un des mots de contrôle par une grandeur X résultant du traitement d'une donnée complémentaire D à transmettre au terminal de réception par une fonction G, ladite donnée complémentaire D étant récupérée par ledit terminal de réception au moyen d'une fonction H duale de la fonction G.

Le terminal de réception, destiné à recevoir le contenu embrouillé transmis par ledit serveur et accompagné d'une liste de mots de contrôle dans laquelle au moins un des mots de contrôle a été remplacé par une grandeur X résultant du traitement d'une donnée complémentaire D par une fonction G ayant une fonction duale H, comporte un module permettant de récupérer, par application de la fonction H à la donnée X, le mot de contrôle remplacé et/ou la donnée D.

Dans un mode de réalisation de l'invention, ce module du terminal est un module logiciel.

Dans un autre mode de réalisation de l'invention, ce terminal constitue un module observateur comportant des moyens pour renvoyer ladite donnée complémentaire à l'opérateur.

### BRÈVE DESCRIPTION DES DESSINS

D'autres caractéristiques et avantages de l'invention ressortiront de la description qui va suivre, prise à titre d'exemple non limitatif, en référence aux figures annexées dans lesquelles :
- la figure 1, décrite précédemment, illustre schématiquement un dispositif de redistribution frauduleuse de mots de contrôle d'accès à un contenu embrouillé ;
- la figure 2 illustre schématiquement la mise en oeuvre du procédé selon l'invention dans le contexte du dispositif de la figure 1.
- les figures 3 et 4 illustrent un exemple de détermination par l'équipement de l'opérateur du mot de contrôle à tatouer.

### EXPOSÉ DÉTAILLÉ DE MODES DE RÉALISATION PARTICULIERS

L'invention sera décrite dans un contexte de distribution de programmes audiovisuels embrouillés.

Cette distribution peut être :
- dans le cadre d'un service de diffusion en direct dans lequel le contenu est diffusé en temps réel vers un grand nombre d'utilisateurs, par l'intermédiaire d'un réseau de diffusion (satellite, câble, hertzien terrestre, IP en mode broadcast/multicast...).
- dans le cadre d'un service VOD (pour Video On Demand) dans lequel, sur requête, un contenu est envoyé à un utilisateur particulier via un réseau de distribution permettant l'adressage individuel de l'utilisateur (typiquement réseau IP en mode unicast).
- dans le cadre d'un service PVR (pour Personal Video Recorder) dans lequel un contenu (diffusé ou en VOD) est enregistré par l'utilisateur sur son équipement terminal ou par une fonction similaire proposée par l'opérateur du réseau, l'utilisateur pouvant accéder ultérieurement au contenu enregistré.

Quel que soit le service fourni, le procédé selon l'invention comporte une étape de configuration consistant à désigner le contenu (ou service) concerné et le mot de contrôle qui doit être modifié par le processeur de sécurité.

Dans la suite de cette description, on désignera par l'expression « tatouage d'un mot de contrôle » le remplacement de ce mot de contrôle par une donnée par application du procédé selon l'invention.

Des références identiques désigneront les éléments communs aux différentes figures.

La figure 2 illustre schématiquement la mise en oeuvre du procédé dans l'architecture décrite à la figure 1.

Dans l'exemple illustré par cette figure 2, un terminal de réception 4 d'un utilisateur reçoit de la tête de réseau quatre ECM successifs ECM(1-CWp/CWf), ECM(2-CWp/CWf), ECM(3- CWp/CWf) et ECM(4- CWp/CWf) comportant chacun une paire de mots de contrôle CWₚ, CW_{f} représentant respectivement le mot de contrôle courant CWₚ (p pour « present ») et le mot de contrôle suivant CW_{f} (f pour « following »). On comprend que le mot de contrôle suivant CW_{f} dans un ECM, par exemple ECM(2- CWₚ / CW_{f}) est le mot de contrôle courant CWₚ dans l'ECM suivant, dans cet exemple ECM(3- CWₚ / CW_{f}).

Cette architecture comporte en outre un terminal observateur 20 programmé pour échanger des informations avec la tête de réseau via un canal sécurisé.

Le terminal de réception 4 reçoit avec le contenu des messages ECM et les transmet au processeur de sécurité 6 (flèche 5). A chaque ECM reçu le processeur de sécurité 6 vérifie les conditions d'accès, déchiffre les mots de contrôle contenus dans ces ECM puis transmet (flèche 8) les mots de contrôle déchiffrés au terminal de réception 4. Dans le cas particulier de l'ECM (2-CWₚ/CW_{f}), le mot de contrôle CW_{f} qui devrait être renvoyé au terminal de réception est remplacé par la donnée CW_{f-UA} (égale à G (UA)), ou mot de contrôle tatoué, calculée en fonction de l'identifiant unique UA du processeur de sécurité 6.

La capture et l'analyse, par le terminal observateur 20, de la donnée CW_{f-UA} transmise frauduleusement par le serveur pirate 10 aux terminaux pirates 14 permet de déterminer l'UA du processeur de sécurité fournisseur du mot de contrôle tatoué, et donc contributeur au piratage.

Notons que le terminal observateur est contrôlé par l'opérateur et est configuré pour distinguer une valeur de mot de contrôle d'une valeur issue du tatouage, c'est à dire d'un résultat X de la fonction G. Cette distinction s'opère par exemple en comparant les valeurs reçues du dispositif pirate aux mots de contrôle effectivement utilisés par l'opérateur. On améliore cette comparaison en l'effectuant en corrélation avec les instants d'activation du procédé que l'opérateur définit lui-même.

Le terminal observateur applique alors la fonction duale H à la donnée reçue pour en extraire l'identifiant du processeur de sécurité UA (égal à H(CW_{f-UA})) par application de la fonction H

Le terminal observateur 20 transmet ensuite à la tête de réseau, via le canal sécurisé, ladite UA dudit processeur de sécurité.

L'opérateur peut alors appliquer une contre-mesure à l'encontre du dispositif pirate ainsi identifié.

Notons que le mot de contrôle tatoué remplaçant le mot de contrôle CW_{f} peut être calculé en fonction d'un identifiant propre à l'utilisateur de l'équipement d'utilisateur 2 sans sortir du cadre de l'invention.

Dans les normes en vigueur concernant la mise en oeuvre de l'embrouillage, du transport et du désembrouillage dans un contexte tel que DVB, les mots de contrôle CW ne sont pas désignés comme « courant » et « suivant » mais comme « pair » et « impair » en référence aux phases « paire » et « impaire » de l'embrouillage. Quand l'embrouillage est dans la phase « paire », le mot de contrôle « pair » est le mot de contrôle « courant » et le mot de contrôle « impair » est le mot de contrôle « suivant ». Ceci s'inverse quand l'embrouillage est en phase « impaire ». Aussi, afin de permettre au processeur de sécurité 6 de repérer dans le temps le mot de contrôle « suivant » parmi les mots de contrôle transportés dans les ECM, un attribut de parité de l'embrouillage est associé au contenu embrouillé à chaque cryptopériode. Cet attribut permet de déterminer lequel des mots de contrôle « pair » ou « impair » est utilisé pour embrouiller le contenu pendant la cryptopériode courante. On note qu'une indication de la parité d'embrouillage existe déjà dans les contenus embrouillés (vidéo, son) mais elle n'est pas exploitable en temps réel par un système d'accès conditionnel dans un équipement d'utilisateur, c'est pourquoi un tel attribut de parité est introduit spécifiquement dans les messages ECM. Cet attribut est déterminé à l'émission du contenu et des messages ECM associés.

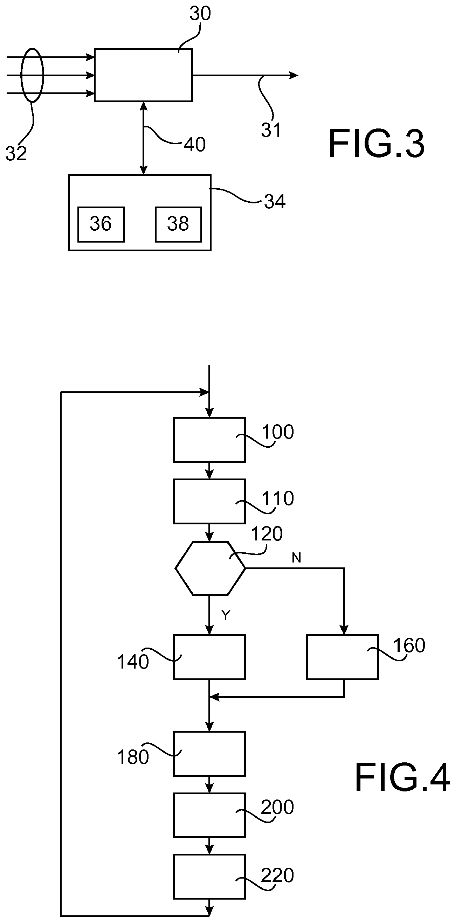

Les figures 3 et 4 illustrent un exemple de détermination par l'équipement de l'opérateur du mot de contrôle à tatouer.

En référence à la figure 3, l'équipement de l'opérateur comprend notamment un multiplexeur/embrouilleur 30 chargé de combiner dans un multiplex 31, par exemple conforme à la norme ISO 13818 « MPEG2 », des flux 32 numériques vidéo, audio ou données diverses constitutifs de contenus, et de les embrouiller. Un générateur ECMG 34 fournit au multiplexeur 30 des messages ECM à associer aux contenus dans le multiplex 31.

Le générateur ECMG 34 comporte en outre une mémoire 36 contenant une variable CWₚₐᵢᵣ à laquelle il affecte la dernière valeur du mot de contrôle reçu du multiplexeur 30 qu'il a identifié comme mot de contrôle pair et une deuxième mémoire 38 dans laquelle il mémorise la parité du mot de contrôle qu'il a déterminé comme étant le mot de contrôle à tatouer. Par défaut la variable CWₚₐᵢᵣ est non significative.

Parmi d'autres réalisations possibles, un protocole 40 de dialogue entre le multiplexeur 30 et le générateur ECMG 34 est conforme à la norme TS 103 197 « DVB Simulcrypt ». La mise en oeuvre de ce protocole est décrite ici dans le cas de messages ECM transportant deux mots de contrôle. L'établissement selon ce protocole d'un canal d'échange entre le multiplexeur 30 et le générateur ECMG 34 est connu et est supposé avoir été effectué.

La figure 4 est un exemple de diagramme temporel exécuté par le multiplexeur 30 et le générateur ECMG 34 à chaque cryptopériode pour déterminer le mot de contrôle à tatouer.

Lors d'une étape 100, le multiplexeur 30 envoie au générateur ECMG 34 une demande de message ECM dont les paramètres sont notamment les deux mots de contrôle pair CW₂ₖ et impair CW₂ₖ₊₁ à insérer dans l' ECM demandé. Un de ces mots de contrôle est le mot de contrôle courant utilisé par l'embrouillage en cours, l'autre est le mot de contrôle suivant. En effet, le protocole « DVB Simulcrypt » identifie la parité des mots de contrôle envoyés par le multiplexeur au générateur ECMG 34, mais ne précise pas lequel de ces mots de contrôle est celui utilisé par l'embrouillage en cours.

Lors d'une étape 110, le générateur ECMG 34 extrait de la demande qu'il a reçue les deux mots de contrôle et les autres paramètres. Ces autres paramètres servent typiquement au générateur ECMG 34 à construire la condition d'accès à insérer dans l'ECM ; toutefois, ils n'interviennent pas dans le processus décrit ici.

Lors d'une étape 120, le générateur ECMG 34 compare la valeur du mot de contrôle pair reçu CW₂ₖ à la valeur de sa variable CWₚₐᵢᵣ. Si ces deux valeurs sont identiques, il conclut que ce mot de contrôle CW₂ₖ, inchangé depuis la cryptopériode précédente, est le mot de contrôle courant utilisé par l'embrouilleur 30. Dans ce cas, lors d'une étape 140, le générateur ECMG 34 mémorise dans la deuxième mémoire 38 que la parité du mot de contrôle à tatouer est impaire. Si les deux valeurs comparées à l'étape 120 ne sont pas identiques, le générateur ECMG 34 mémorise, lors d'une étape 160, dans la deuxième mémoire 38 que la parité du mot de contrôle à tatouer est paire.

Puis, lors d'une étape 180, le générateur ECMG 34 mémorise la valeur du mot de contrôle pair reçu CW₂ₖ dans la première mémoire 36.

Enfin, le générateur ECMG 34 construit lors d'une étape 200 le message ECM demandé par le multiplexeur à l'étape 110. Pour générer ce message ECM, le générateur ECMG 34 chiffre les deux mots de contrôle CW₂ₖ et CW₂ₖ₊₁ reçus et les combine notamment à la condition d'accès choisie. Lorsque la fonction de tatouage est activée, comme cela sera décrit plus loin, le générateur ECMG 34 insère également dans le message ECM la valeur contenue dans la deuxième mémoire désignant le mot de contrôle à tatouer. Ce message, une fois constitué, est envoyé au multiplexeur 30 lors d'une étape 220 pour être inséré dans le multiplex numérique 32.

Les étapes 100 à 220 sont répétées à chaque cryptopériode.

### Contrôle du tatouage du mot de contrôle par l'opérateur

La fonction de tatouage est contrôlée par l'opérateur en deux phases : une phase d'armement pendant laquelle un processeur de sécurité peut appliquer le tatouage à un mot de contrôle, et une phase d'activation pendant laquelle, sous réserve d'armement, un processeur de sécurité doit appliquer le tatouage à un mot de contrôle. Selon l'implémentation, l'une et/ou l'autre de ces phases sont implicites, ou explicitement commandées par l'opérateur.

Dans un mode préféré de réalisation, l'opérateur contrôle explicitement les paramètres de ces deux phases. Le procédé selon l'invention s'applique, pour un processeur de sécurité donné, à un service (programme, ou chaîne) donné ou à l'ensemble des services fournis par l'opérateur.

Lors de la phase d'armement, l'opérateur définit pour un processeur de sécurité donné :
- La période pour laquelle la fonction de tatouage est armée. Hors cette période, aucun tatouage n'est effectué, et durant cette période, un tatouage peut être effectué par ledit processeur de sécurité. Cette période est donc une fenêtre d'application du tatouage des mots de contrôle.
- L'identifiant d'un service pour lequel le tatouage doit être effectué. L'opérateur sélectionne ainsi le service qu'il prévoit d'observer pour identifier un pirate. Préférentiellement, l'opérateur peut désigner un service particulier ou tous les services.

L'armement du tatouage des mots de contrôle est réalisé par l'opérateur par la transmission au processeur de sécurité d'un utilisateur d'un EMM confidentiel.

Un tel EMM confidentiel contient un paramètre spécifique, dit d'armement du tatouage des mots de contrôle PDTCW, qui comprend :
- La date d'armement du tatouage des mots de contrôle DDTCW ;
- La durée de la période d'armement du tatouage des mots de contrôle PPCW, préférentiellement égale à la durée de la cryptopériode utilisée par le multiplexeur.
- Un identifiant SERVICE_ID du service pour lequel le tatouage est à armer, dont une valeur particulière permet d'armer le tatouage des mots de contrôle pour l'ensemble des services de l'opérateur.

Le paramètre d'armement du tatouage des mots de contrôle est transmis au processeur de sécurité 6 avec une date de diffusion de façon à empêcher un rejeu du message EMM correspondant.

Le processeur de sécurité 6 est programmé de façon à ne traiter ce paramètre que s'il est daté et si sa date de diffusion est supérieure à celle du dernier paramètre de même nature déjà traité.

En exploitant les capacités d'adressage des messages EMM, l'opérateur peut armer la fonction de tatouage dans un processeur de sécurité particulier, dans un groupe de processeurs de sécurité ou dans tous les processeurs de sécurité.

De façon analogue, la fonction de tatouage des mots de contrôle peut être désarmée par message EMM, par exemple si l'opérateur souhaite suspendre cette fonction sur un sous ensemble du parc, alors que le message d'armement a initialement été adressé à tous les terminaux de réception du parc.

Le processeur de sécurité 6 est programmé pour utiliser également cette fonction de désarmement après avoir envoyé un mot de contrôle tatoué. Ceci permet au processeur de sécurité 6 de n'appliquer qu'une seule fois la procédure de tatouage du mot de contrôle CW à compter de la date de début de tatouage des mots de contrôle.

En variante, le paramètre d'armement PDTCW est transmis aux processeurs de sécurité 6 sous forme confidentielle dans un ECM.

La phase d'activation est celle pendant laquelle un processeur de sécurité applique le tatouage à un mot de contrôle particulier. L'activation du tatouage est réalisée par un paramètre spécifique CWTAT introduit dans un ECM par le générateur d'ECM 32.

Ce paramètre CWTAT caractérise les conditions d'application du tatouage des mots de contrôle. Il comporte :
- un identifiant ECM_SERVICE_ID du service auquel se rapporte l'ECM,
- un paramètre PARITY désignant lequel des deux mots de contrôle présents dans l'ECM doit être tatoué. Ce paramètre reprend la valeur de l'indicateur 38. Préférentiellement, outre les valeurs « pair » et « impair », ce paramètre peut prendre la valeur « pas de tatouage » pour inhiber l'activation.

Ce paramètre CWTAT est en outre associé à une date du message ECM. Cette date est explicite dans le message ECM ou, préférentiellement, établie par le processeur de sécurité à l'instant de l'arrivée de l'ECM. Plusieurs solutions techniques sont connues pour qu'un processeur de sécurité puisse gérer le temps et connaître la date d'arrivée d'un ECM.

Préférentiellement, le paramètre CWTAT est transmis dans un message ECM de façon confidentielle.

On comprend que tous les processeurs de sécurité ciblés lors de la phase d'armement sont susceptibles d'activer le procédé à la réception du message ECM.

En variante, la phase d'activation peut être déclenchée sur une partie des processeurs de sécurité dans lesquels le procédé de tatouage a été armé. L'activation met alors en oeuvre un message ECM et un message EMM. Le message ECM transporte le paramètre CWTAT qui prépare le processeur de sécurité à appliquer le procédé mais ne le déclenche pas. Le message EMM transporte une commande spécifique pour que le (les) processeur(s) de sécurité ciblé(s) par ce message EMM déclenche(nt) effectivement le procédé de tatouage.

### Traitement du tatouage du mot de contrôle par le processeur de sécurité

Lors de la phase d'armement, le processeur de sécurité 6 reçoit le paramètre PDTCW d'armement du tatouage des mots de contrôle par EMM pour un opérateur. Lors du traitement de ce message EMM, le processeur de sécurité vérifie que ce message n'a pas déjà été traité et, dans l'affirmative, mémorise les paramètres d'armement du tatouage extraits du paramètre PDTCW :
- Date à partir de laquelle l'activation du tatouage des mots de contrôle est possible ;
- Durée de la période pendant laquelle le tatouage des mots de contrôle est possible ;
- Identifiant du service pour lequel les mots de contrôle peuvent être tatoués.

A la réception d'un message ECM d'un opérateur contenant le paramètre CWTAT d'activation du tatouage, le processeur de sécurité 6 n'effectue le tatouage que si les conditions suivantes sont réunies :
- le tatouage des mots de contrôle est armé, c'est-à-dire le processeur de sécurité dispose des données (période et service d'armement) d'un paramètre PDTCW pour cet opérateur,
- le paramètre PARITY identifiant dans l'ECM le mot de contrôle à tatouer ne vaut pas « pas de tatouage »,
- le paramètre ECM_SERVICE_ID de l'ECM correspond à l'identifiant de service SERVICE_ID donné par l'EMM d'armement,
- la date de l'ECM est comprise dans la fenêtre d'application de la mesure déterminée par la période d'armement (entre DDTCW et DDTCW + PPCW).

Si le paramètre PARITY vaut « pair », le CW pair est tatoué.

Si le paramètre PARITY vaut « impair », le CW impair est tatoué.

A la fin de cette procédure, préférentiellement, le processeur de sécurité procède au désarmement de la fonction de tatouage afin d'éviter la répétition du tatouage du mot de contrôle CW.

Le procédé de tatouage à des fins d'identification d'un dispositif illicite est d'autant plus efficace que son activation n'est pas prédictible par le dispositif visé. Aussi, outre la confidentialité des paramètres concernés dans le message ECM, il est préféré que l'activation du procédé soit déclenchée par l'opérateur à des instants aléatoires. En outre, au-delà de l'activation par réception du message ECM, l'exécution effective du tatouage peut être retardée d'un délai aléatoire par le processeur de sécurité.

### Transmission d'une commande à un terminal de réception

Tout en restant dans le cadre de l'invention, le procédé décrit plus haut peut être utilisé pour transmettre une commande à un terminal de réception. La donnée D représente cette commande et a une signification particulière compréhensible par le terminal de réception pour exécuter un traitement spécifique. C'est un moyen pour rendre confidentiel l'envoi d'une commande vers un terminal de réception.

Une telle commande au terminal représentée par la donnée D peut être :
- générée et déclenchée par le processeur de sécurité lui-même : par exemple quand le processeur de sécurité sait détecter un fonctionnement anormal du terminal de réception significatif d'un terminal illicite, il déclenche lui-même l'envoi au terminal d'une commande d'invalidation du terminal transmise en tant que donnée D selon l'invention.
- générée par le processeur de sécurité sur déclenchement par l'opérateur : par exemple quand un équipement d'utilisateur a été identifié par le tatouage par UA des mots de contrôle décrit précédemment, le procédé est armé à nouveau sur cet équipement puis le processeur de sécurité déclenche lui-même l'envoi au terminal d'une commande d'invalidation du terminal par l'intermédiaire de la donnée D ; ce mode de fonctionnement est précisé au processeur de sécurité lors de la phase d'armement ou la phase d'activation par un paramètre complémentaire dédié.

- générée et déclenchée par l'opérateur : dans cet exemple la commande exprimée par la donnée D est émise par l'opérateur, le tatouage est alors effectué dès la génération des ECM. Dans ce cas le processeur de sécurité n'effectue aucun tatouage complémentaire sur les mots de contrôle qu'il fournit au terminal de réception. Une telle commande est typiquement d'usage général comme l'activation ou la désactivation des certaines sorties audio-visuelles du terminal de réception. Préférentiellement les fonctions de tatouage G et H sont choisies de façon telles que le terminal de réception puisse retrouver la valeur du mot de contrôle tatoué et celle de la commande D.

## Revendications

1. Procédé de transmission d'au moins une donnée complémentaire D dans une liste de mots de contrôle CWᵢ d'accès à un contenu embrouillé transmis par un serveur de contenu d'un opérateur à un équipement d'utilisateur (2) comportant un terminal de réception (4) associé à un processeur de sécurité (6), chaque mot de contrôle CWᵢ de ladite liste étant destiné à désembrouiller ledit contenu au cours d'une cryptopériode déterminée,
procédé **caractérisé par** les étapes suivantes :
a) remplacer préalablement au moins l'un des mots de contrôle de ladite liste par une grandeur X résultant du traitement de ladite donnée complémentaire D par une fonction G ayant une fonction duale H,
et, à la réception de ladite liste par le terminal de réception (4),
b) récupérer ladite donnée complémentaire D par traitement de ladite grandeur X par la fonction duale H.

2. Procédé selon la revendication 1, **caractérisé en ce que** la grandeur X présente un format identique à celui du mot de contrôle remplacé.

3. Procédé selon la revendication 1, **caractérisé en ce que** ladite liste comporte un premier mot de contrôle CW_{c} destiné à déchiffrer le contenu au cours de la cryptopériode courante, et un deuxième mot de contrôle CWₛ destiné à déchiffrer le contenu au cours de la cryptopériode suivante, et **en ce que** ladite grandeur X remplace le deuxième mot de contrôle CWₛ.

4. Procédé selon la revendication 3, **caractérisé en ce que** ladite donnée complémentaire D est un identifiant unique UA du processeur de sécurité (6).

5. Procédé selon la revendication 3, **caractérisé en ce que** ladite donnée complémentaire D est un identifiant de l'utilisateur.

6. Procédé selon la revendication 1, **caractérisé en ce que** ladite donnée complémentaire D est une commande destinée au terminal de réception (4).

7. Procédé selon la revendication 1, **caractérisé en ce que** ladite fonction G et ledit remplacement du mot de contrôle sont exécutés dans le serveur de contenu de l'opérateur.

8. Procédé selon la revendication 1, **caractérisé en ce que** ladite fonction G et ledit remplacement du mot de contrôle sont exécutés dans le processeur de sécurité (6) associé au terminal de réception (4).

9. Procédé selon la revendication 8, dans lequel l'exécution dans le processeur de sécurité (6) de la fonction G et du remplacement du mot de contrôle est pilotée par l'opérateur et comporte une étape d'armement et une étape d'activation,
ladite étape d'armement consistant à définir, pour un contenu donné et pour un processeur de sécurité sélectionné (6), une période d'armement pendant laquelle la fonction G et le remplacement du mot de contrôle sont exécutables,
ladite étape d'activation consistant à déclencher l'exécution, par ledit processeur de sécurité sélectionné (6), de la fonction G et du remplacement d'un mot de contrôle particulier par la grandeur X conformément aux conditions définies à l'étape d'armement.

10. Procédé selon la revendication 9, **caractérisé en ce que** la période d'armement et la désignation du contenu pour lesquelles ladite fonction G et ledit remplacement du mot de contrôle peuvent être exécutés sont transmises sous forme masquée dans un message EMM aux processeurs de sécurité sélectionnés (6), et **en ce que** l'exécution de la fonction G et le remplacement du mot de contrôle particulier par la grandeur X sont déclenchés par l'opérateur au moyen d'une commande spécifique transmise sous forme masquée dans un message EMM ou dans un message ECM.

11. Procédé selon la revendication 8, **caractérisé en ce que** l'exécution de la fonction G et du remplacement du mot de contrôle particulier par la grandeur X est déclenchée de façon autonome par le processeur de sécurité(6).

12. Procédé selon la revendication 1, **caractérisé en ce que** l'exécution de la fonction G et du remplacement du mot de contrôle particulier par la grandeur X est déclenchée de façon aléatoire.

13. Procédé selon la revendication 9 dans lequel la désignation du mot de contrôle particulier à remplacer par la grandeur X est réalisée par un générateur d'ECM (30) associé au serveur de contenu.

14. Procédé selon la revendication 9, **caractérisé en ce que** la désignation du mot de contrôle à remplacer par la grandeur X et l'identification du contenu en cours sont transmises sous forme masquée aux processeurs de sécurité (6) dans des messages ECM associés audit contenu.

15. Processeur de sécurité (6) associé à un terminal de réception (4) dans un équipement d'un utilisateur (2) destiné à recevoir un contenu embrouillé transmis par un serveur de contenu d'un opérateur avec une liste de mots de contrôle CWᵢ destinés chacun à désembrouiller ledit contenu au cours d'une cryptopériode déterminée, processeur de sécurité (6) **caractérisé en ce qu'**il comporte un module permettant de remplacer dans ladite liste au moins l'un des mots de contrôle par une grandeur X résultant du traitement par une fonction G d'une donnée complémentaire D à transmettre audit terminal de réception (4), ladite donnée complémentaire D étant récupérée par ledit terminal de réception (4) au moyen d'une fonction H duale de la fonction G.

16. Processeur de sécurité (6) selon la revendication 15, **caractérisé en ce que** ladite donnée complémentaire D est un identifiant unique UA dudit processeur de sécurité (6).

17. Processeur de sécurité (6) selon la revendication 15, **caractérisé en ce que** ladite donnée complémentaire D est une commande destinée au terminal de réception (4).

18. Serveur de contenu destiné à transmettre, à un équipement d'un utilisateur (2) comportant un terminal de réception (4) associé à un processeur de sécurité (6), un contenu embrouillé auquel est associé une liste de mots de contrôle CWᵢ destinés chacun à désembrouiller ledit contenu au cours d'une cryptopériode déterminée, serveur **caractérisé en ce qu'**il comporte un module permettant de remplacer dans ladite liste au moins l'un des mots de contrôle par une grandeur X résultant du traitement d'une donnée complémentaire D à transmettre audit terminal de réception (4) par une fonction G, ladite donnée complémentaire D étant récupérée par ledit terminal de réception (4) au moyen d'une fonction H duale de la fonction G.

19. Terminal de réception (4) destiné à recevoir un contenu embrouillé transmis par un serveur, ledit contenu étant accompagné d'une liste de mots de contrôle CWᵢ, chaque mot de contrôle étant destiné à désembrouiller ledit contenu au cours d'une cryptopériode déterminée, dans laquelle liste au moins un des mots de contrôle a été remplacé par une grandeur X résultant du traitement d'une donnée complémentaire D par une fonction G ayant une fonction duale H, terminal de réception (4) **caractérisé en ce qu'**il comporte un module permettant de récupérer par ladite fonction H ledit mot de contrôle et/ou ladite donnée complémentaire.

20. Terminal de réception selon la revendication 19, **caractérisé en ce que** ledit module est un module logiciel.

21. Terminal de réception selon la revendication 19, **caractérisé en ce qu'**il est associé à un processeur de sécurité (6).

22. Terminal de réception selon la revendication 19, **caractérisé en ce qu'**il constitue un terminal observateur comportant des moyens pour renvoyer ladite donnée complémentaire à l'opérateur.

## Patentansprüche

1. Verfahren zur Übertragung von mindestens einem zusätzlichen Datum D aus einer Liste von Steuerwörtern CWᵢ des Zugangs zu einem verwürfelten Inhalt, der durch einen Inhalt-Server eines Betreibers übertragen wird, an ein Benutzergerät (2), das ein Empfangsendgerät (4) aufweist, das mit einem Sicherheitsprozessor (6) verbunden ist, wobei jedes Steuerwort CWᵢ der Liste dazu bestimmt ist, den Inhalt während einer vorbestimmten Kryptoperiode zu entwürfeln,
Verfahren, das durch die folgenden Schritte gekennzeichnet ist:
a) vorheriges Ersetzen von mindestens einem der Steuerwörter der Liste durch eine Größe X, die aus der Verarbeitung des zusätzlichen Datums D durch eine Funktion G, die eine duale Funktion H aufweist, hervorgeht,
und beim Empfangen der Liste durch das Empfangsendgerät (4),
b) Rückgewinnen des zusätzlichen Datums D durch Verarbeitung der Größe X durch die duale Funktion H.

2. Verfahren nach Anspruch 1, **dadurch gekennzeichnet, dass** die Größe X ein Format aufweist, das mit jenem des ersetzten Steuerwortes identisch ist.

3. Verfahren nach Anspruch 1, **dadurch gekennzeichnet, dass** die Liste ein erstes Steuerwort CW_{c}, das dazu bestimmt ist, den Inhalt während der laufenden Kryptoperiode zu entschlüsseln, und ein zweites Steuerwort CWₛ aufweist, das dazu bestimmt ist, den Inhalt während der folgenden Kryptoperiode zu entschlüsseln, und dass die Größe X das zweite Steuerwort CWₛ ersetzt.

4. Verfahren nach Anspruch 3, **dadurch gekennzeichnet, dass** das zusätzliche Datum D eine eindeutige Kennung UA des Sicherheitsprozessors (6) ist.

5. Verfahren nach Anspruch 3, **dadurch gekennzeichnet, dass** das zusätzliche Datum D eine Kennung des Benutzers ist.

6. Verfahren nach Anspruch 1, **dadurch gekennzeichnet, dass** das zusätzliche Datum D ein Befehl ist, der für das Empfangsendgerät (4) bestimmt ist.

7. Verfahren nach Anspruch 1, **dadurch gekennzeichnet, dass** die Funktion G und das Ersetzen des Steuerwortes in dem Inhalt-Server des Betreibers durchgeführt werden.

8. Verfahren nach Anspruch 1, **dadurch gekennzeichnet, dass** die Funktion G und das Ersetzen des Steuerwortes in dem Sicherheitsprozessor (6), der mit dem Empfangsendgerät (4) verbunden ist, durchgeführt werden.

9. Verfahren nach Anspruch 8, wobei das Durchführen der Funktion G und des Ersetzens des Steuerwortes in dem Sicherheitsprozessor (6) durch den Betreiber gesteuert wird und einen Schritt des Einstellens und einen Schritt des Aktivierens aufweist,
wobei der Schritt des Einstellens darin besteht, für einen bestimmten Inhalt und für einen ausgewählten Sicherheitsprozessor (6) eine Zeitspanne des Einstellens zu definieren, in der die Funktion G und das Ersetzen des Steuerwortes durchführbar sind,
wobei der Schritt des Aktivierens darin besteht, das Durchführen durch den ausgewählten Sicherheitsprozessor (6) der Funktion G und des Ersetzens eines besonderen Steuerwortes durch die Größe X in Konformität mit den in dem Schritt des Einstellens definierten Bedingungen auszulösen.

10. Verfahren nach Anspruch 9, **dadurch gekennzeichnet, dass** die Zeitspanne des Einstellens und die Benennung des Inhalts, für die die Funktion G und das Ersetzen des Steuerwortes durchgeführt werden können, in maskierter Form in einer EMM-Nachricht an die ausgewählten Sicherheitsprozessoren (6) übertragen werden, und dass das Ausführen der Funktion G und das Ersetzen des besonderen Steuerwortes durch die Größe X von dem Betreiber durch einen spezifischen Befehl ausgelöst werden, der in maskierter Form in einer EMM-Nachricht oder in einer ECM-Nachricht übertragen wird.

11. Verfahren nach Anspruch 8, **dadurch gekennzeichnet, dass** das Ausführen der Funktion G und des Ersetzens des besonderen Steuerwortes durch die Größe X autonom von dem Sicherheitsprozessor (6) ausgelöst wird.

12. Verfahren nach Anspruch 1, **dadurch gekennzeichnet, dass** das Ausführen der Funktion G und des Ersetzens des besonderen Steuerwortes durch die Größe X zufällig ausgelöst wird.

13. Verfahren nach Anspruch 9, wobei die Benennung des besonderen Steuerwortes, das durch die Größe X zu ersetzen ist, durch einen ECM-Generator (30) durchgeführt wird, der mit dem Inhalt-Server verbunden ist.

14. Verfahren nach Anspruch 9, **dadurch gekennzeichnet, dass** die Benennung des Steuerwortes, das durch die Größe X zu ersetzen ist, und die laufende Identifizierung des Inhalts in maskierter Form an die Sicherheitsprozessoren (6) in ECM-Nachrichten, die mit dem Inhalt verbunden sind, übertragen werden.

15. Sicherheitsprozessor (6), der mit einem Empfangsendgerät (4) in einem Benutzergerät (2) verbunden ist, das dazu bestimmt ist, einen verwürfelten Inhalt, der durch einen Inhalt-Server eines Betreibers übertragen wird, mit einer Liste von Steuerwörtern CWᵢ zu empfangen, die dazu bestimmt sind, jeweils den Inhalt während einer vorbestimmten Kryptoperiode zu entwürfeln, wobei der Sicherheitsprozessor (6) **dadurch gekennzeichnet ist, dass** er ein Modul aufweist, das ermöglicht, in der Liste mindestens eines der Steuerwörter durch eine Größe X, die aus der Verarbeitung eines zusätzlichen Datums D, das an das Empfangsendgerät (4) zu übertragen ist, durch eine Funktion G hervorgeht, zu ersetzen, wobei das zusätzliche Datum D durch das Empfangsendgerät (4) durch eine duale Funktion H der Funktion G rückgewonnnen wird.

16. Sicherheitsprozessor (6) nach Anspruch 15, **dadurch gekennzeichnet, dass** das zusätzliche Datum D eine eindeutige Kennung UA des Sicherheitsprozessors (6) ist.

17. Sicherheitsprozessor (6) nach Anspruch 15, **dadurch gekennzeichnet, dass** das zusätzliche Datum D ein Befehl ist, der für das Empfangsendgerät (4) bestimmt ist.

18. Inhalt-Server, der dazu bestimmt ist, an ein Benutzergerät (2), das ein Empfangsendgerät (4) aufweist, das mit einem Sicherheitsprozessor (6) verbunden ist, einen verwürfelten Inhalt zu übertragen, der mit einer Liste von Steuerwörtern CWᵢ verbunden ist, die dazu bestimmt sind, jeweils den Inhalt während einer vorbestimmten Kryptoperiode zu entwürfeln, wobei der Server **dadurch gekennzeichnet ist, dass** er ein Modul aufweist, das ermöglicht, in der Liste mindestens eines der Steuerwörter durch eine Größe X, die aus der Verarbeitung eines zusätzlichen Datums D, das an das Empfangsendgerät (4) zu übertragen ist, durch eine Funktion G hervorgeht, zu ersetzen, wobei das zusätzliche Datum D durch das Empfangsendgerät (4) durch eine duale Funktion H der Funktion G rückgewonnnen wird.

19. Empfangsendgerät (4), das dazu bestimmt ist, einen verwürfelten Inhalt zu empfangen, der durch einen Server übertragen wird, wobei der Inhalt von einer Liste von Steuerwörtern CWᵢ begleitet ist, wobei jedes Steuerwort dazu bestimmt ist, den Inhalt während einer vorbestimmten Kryptoperiode zu entwürfeln, wobei in der Liste mindestens eines der Steuerwörter durch eine Größe X ersetzt worden ist, die aus der Verarbeitung eines zusätzlichen Datums D durch eine Funktion G hervorgeht, die eine duale Funktion H aufweist, wobei das Empfangsendgerät (4) **dadurch gekennzeichnet ist, dass** es ein Modul aufweist, das ermöglicht, durch die Funktion H das Steuerwort und/oder das zusätzliche Datum rückzugewinnen.

20. Empfangsendgerät nach Anspruch 19, **dadurch gekennzeichnet, dass** das Modul ein Softwaremodul ist.

21. Empfangsendgerät nach Anspruch 19, **dadurch gekennzeichnet, dass** es mit einem Sicherheitsprozessor (6) verbunden ist.

22. Empfangsendgerät nach Anspruch 19, **dadurch gekennzeichnet, dass** es ein Betrachter-Endgerät bildet, das Mittel aufweist, um das zusätzliche Datum an den Betreiber zurückzusenden.

## Claims

1. Method of transmitting at least one additional piece of data D in a list of access control words CWᵢ to a scrambled content transmitted by a content server of an operator to a user equipment (2) including a reception terminal (4) associated with a security processor (6), each control word CWᵢ of said list being designed to descramble said contents during a determined cryptoperiod,
method **characterised by** the following steps:
a) prior replacement of at least one of the control words of said list with a magnitude X resulting from the treatment of said additional piece of data D by a function G having a dual function H,
and, at the reception of said list by the reception terminal (4),
b) retrieve said additional piece of data D by treatment of said magnitude X by dual function H.

2. Method according to claim 1, **characterised in that** magnitude X presents a format that is identical to that of the replaced control word.

3. Method according to claim 1, **characterised in that** said list includes a first control word CW_{c} designed to decrypt the contents during the present cryptoperiod, and a second control word CWₛ designed to decrypt the contents during the following cryptoperiod, and **in that** said magnitude X replaces the second control word CWₛ.

4. Method according to claim 3, **characterised in that** said additional piece of data D is a unique identifier UA of security processor (6).

5. Method according to claim 3, **characterised in that** said additional piece of data D is an identifier of the user.

6. Method according to claim 1, **characterised in that** said additional piece of data D is a command destined for the reception terminal (4).

7. Method according to claim 1, **characterised in that** said function G and said replacing of the control word are executed in the content server of the operator.

8. Method according to claim 1, **characterised in that** said function G and said replacing of the control word are executed in the security processor (6) associated with reception terminal (4).

9. Method according to claim 8, wherein the execution in security processor (6) of function G and the replacing of the control word is driven by the operator and includes an arming step and an activation step,
said arming step consisting in defining, for a given content and for a selected security processor (6), an arming period during which function G et le replacing of the control word can be executed,
said activation step consisting in triggering the execution, by said selected security processor (6), of function G and the replacing of a particular control word with the magnitude X in accordance with the conditions defined in the arming step.

10. Method according to claim 9, **characterised in that** the arming period and the designation of the content for which said function G and said replacing of control word can be executed are transmitted in hidden format in an EMM message to the selected security processors (6), and **in that** the execution of function G and the replacing of the particular control word with the magnitude X are triggered by the operator using a specific command transmitted in hidden format in an EMM message or in an ECM message.

11. Method according to claim 8, **characterised in that** the execution of function G and the replacing of the particular control word with the magnitude X is triggered autonomously by the security processor (6).

12. Method according to claim 1, **characterised in that** the execution of function G and the replacing of the particular control word with the magnitude X is triggered randomly.

13. Method according to claim 9 wherein the designation of the particular control word to be replaced with magnitude X is carried out by an ECM generator (30) associated with the content server.

14. Method according to claim 9, **characterised in that** the designation of the control word to be replaced by magnitude X and the identification of the present content are transmitted in hidden format to the security processors (6) in ECM messages associated with said content.

15. Security processor (6) associated with a reception terminal (4) in a user equipment (2) designed to receive a scrambled content transmitted by a content server of an operator with a list of control words CWᵢ each designed to descramble said contents during a determined cryptoperiod, security processor (6) **characterised in that** it includes a module making it possible to replace in said list at least one of the control words with a magnitude X resulting from the treatment by a function G of an additional piece of data D to be transmitted to said reception terminal (4), said additional piece of data D being retrieved by said reception terminal (4) using a dual function H of function G.

16. Security processor (6) according to claim 15, **characterised in that** said additional piece of data D is a unique identifier UA of said security processor (6).

17. Security processor (6) according to claim 15, **characterised in that** said additional piece of data D is a command destined to reception terminal (4).

18. Content server designed to transmit, to a user equipment (2) including a reception terminal (4) associated with a security processor (6), a scrambled content to which is associated a list of control words CWᵢ each designed to descramble said contents during a determined cryptoperiod, server **characterised in that** it includes a module making it possible to replace in said list at least one of the control words with a magnitude X resulting from the treatment of an additional piece of data D to transmit to said reception terminal (4) by a function G, said additional piece of data D being retrieved by said reception terminal (4) using a dual function H of function G.

19. Reception terminal (4) designed to receive a scrambled content transmitted by a server, said content being accompanied by a list of control words CWᵢ, each control word being designed to descramble said contents during a determined cryptoperiod, in which said list at least one of the control words has been replaced by a magnitude X resulting from the treatment of an additional piece of data D by a function G having a dual function H, reception terminal (4) **characterised in that** it includes a module making it possible to retrieve via said function H said control word and/or said additional piece of data.

20. Reception terminal according to claim 19, **characterised in that** said module is a software module.

21. Reception terminal according to claim 19, **characterised in that** it is associated with a security processor (6).

22. Reception terminal according to claim 19, **characterised in that** it comprises an observer terminal including means to send said additional piece of data back to the operator.
